# EUROPEAN PATENT APPLICATION

(11) **EP 4 827 041 A1**
(43) Date of publication of application: **21.10.2026**
(21) Application number: 26171896.9
(22) Date of filing: 13.04.2026
(51) Int. Cl.: H04L 9/08

(54) **OBLIVIOUS PERMUTATION BASED ON A SWITCHING NETWORK**

(30) Priority: 14.04.2025 US 202519178406
(71) Applicant: Beijing Zitiao Network Technology Co., Ltd., Beijing 100190 (CN)
(72) Inventor: Niu, Yongchuan, Chaoyang District, Beijing, 100028 (CN); Lu, Wenjie, Chaoyang District, Beijing, 100028 (CN); Wang, Li, Chaoyang District, Beijing, 100028 (CN); Yan, Qiang, Chaoyang District, Beijing, 100028 (CN)
(74) Representative: Grünecker Patent- und Rechtsanwälte PartG mbB

(57) **Abstract**

Methods (400), systems (500), and apparatus, including computer programs encoded on computer storage media (520, 530), are provided. One example method includes obtaining (402) *q* control bits corresponding to *q* switches of a switching network, which can be used to generate a permuted sequence of an input sequence. For a first switch of the *q* switches, the method includes: receiving (406) a random number selected from a first random number or a second random number is received based on oblivious transfer, receiving (408) a first input and a second input through input lines, and receiving (410) a correction word corresponding to the first switch. In response to determining the first random number is selected as the random number, a first output of the first switch is generated (412) based on the first input and the first random number, and a second output of the first switch is generated (412).

## Description

### TECHNICAL FIELD

This specification relates to data processing, and in particular, to secure multiparty computation.

### BACKGROUND

Data plays an increasingly important role in modern society, driving advancements across various sectors. Effective collaboration among data custodians can be beneficial to the value of data. On the other hand, data collaboration may be compromised by isolated data silos due to the control of data by different entities, regulatory compliance on data privacy across countries, and frequent privacy breaches, etc.

Secure multi-party computation (MPC) is a technique developed to address some of the issues in data collaborations. MPC allows parties to jointly process or analyze their respective private data without sharing the private data with others. Thus, data privacy of each party is protected. As data volumes increase, the computational and communication complexities of MPC also escalate significantly. Therefore, MPC protocols are also developed for specific use scenarios to meet practical data security and computational needs.

### SUMMARY

This specification describes technologies for performing oblivious permutation based on a switching network. According to a first aspect, a method is provided. The method includes obtaining, by a first server of a first party participating in a secure multi-party computation (MPC) instance, *q* control bits corresponding to *q* switches of a switching network, where the *q* control bits are obtained based on a permutation to permute a sequence of *n* elements, where *q* and *n* are positive integers. For a first switch of the *q* switches, the method includes receiving, by the first server based on oblivious transfer, a random number selected from a first random number or a second random number, where the random number is selected based on a control bit corresponding to the first switch; receiving a first input through a first input wire of the first switch, where the first input is generated based on a first mask corresponding to the first input wire; receiving a second input through a second input wire of the first switch, wherein the second input is generated based on a second mask corresponding to the second input wire; receiving a correction word of the first switch, wherein the correction word is generated based on the second random number, the first mask, and a fourth mask corresponding to a second output wire of the first switch, wherein the fourth mask is generated based on the second mask and the first random number. In response to determining the first random number is selected as the random number, a first output is generated based on the first input and the first random number; and a second output is generated based on the second input and the first random number. in response to determining that the second random number is selected as the random number, the first output is generated based on the first input, the second random number, and the correction word; and the second output is generated based on the second input, the second random number and the correction word. The method further includes determining a permuted sequence of *n* elements based on an output of the switching network determined based on the first output and the second output of the first switch.

With reference to the first aspect, in some implementations, the first server receives the first random number as the random number when the control bit corresponding to the first switch indicates a straight connection between input wires and output wires of the first switch. The first server receives the second random number as the random number when the control bit corresponding to the first switch indicates a cross connection between input wires and output wires of the first switch.

With reference to the first aspect, in some implementations, a third mask corresponding to a first output wire of the first switch is generated based on the first mask and the first random number.

With reference to the first aspect, in some implementations, the third mask is an exclusive OR (XOR) result of the first mask and the first random number. The fourth mask is an XOR result of the second mask and the first random number. The correction word is an XOR result of the first mask, the fourth mask, and the second random number. The first input is an XOR result of the first mask and a first element of the sequence of *n* elements. The second input is an XOR result of the second mask and a second element of the sequence of *n* elements.

With reference to the first aspect, in some implementations, the method includes, in response to determining the first random number is selected as the random number, computing an XOR result of the first input and the first random number as the first output; and computing an XOR result of the second input and the first random number as the second output.

With reference to the first aspect, in some implementations, the method includes, in response to determining the second random number is selected as the random number, computing an XOR result of the first input, the second random number, and the correction word as the first output; and computing an XOR result of the second input, the second random number, and the correction word as the second output.

With reference to the first aspect, in some implementations, the third mask is a sum of the first mask and the first random number. The fourth mask is difference between the second mask and the first random number. The correction word is difference between the fourth mask and a sum of the first mask and the second random number. The first input is a sum of the first mask and a first element of the sequence of *n* elements. The second input is a sum of the second mask and a second element of the sequence of *n* elements. Sums and differences are calculated over a ring of *l* bits, where the first mask, the second mask, the third mask and the fourth mask each comprise *l* bits, where *l* is a positive integer.

With reference to the first aspect, in some implementations, the method includes, in response to determining the first random number is selected as the random number, computing a sum of the first input and the first random number as the first output; and computing a difference between the second input and the first random number as the second output.

With reference to the first aspect, in some implementations, the method includes, in response to determining the second random number is selected as the random number, computing a sum of the first input, the second random number, and the correction word as the first output; and computing a difference between the second input and a sum of the second random number and the correction word as the second output.

With reference to the first aspect, in some implementations, the switching network comprises a Benes network.

With reference to the first aspect, in some implementations, the secure MPC instance is a secure two-party computation instance.

According to a second aspect, one or more non-transitory computer-readable storage media is provided. The one or more non-transitory computer-readable storage media stores one or more instructions that, when executable by one or more computers, cause the one or more computers to perform the method according to the first aspect and/or one or more implementations of the first aspect.

According to a third aspect, a computer-implemented system is provided. The computer-implemented system includes one or more computers and one or more computer memory devices interoperably coupled with the one or more computers. The one or more computer memory devices have computer-readable storage media storing one or more instructions that, when executed by the one or more computers, perform the method according to the first aspect and/or one or more implementations of the first aspect.

The details of one or more embodiments of the subject matter of this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 is a diagram of an example multi-party computation (MPC) system.
FIG. 2 is an example switching network.
FIGS. 3A-3B illustrate an example switch of a switching network.
FIG. 4 is a flow diagram of an example process of performing oblivious permutation.
FIG. 5 is an example computing system.

Like reference numbers and designations in the various drawings indicate like elements.

### DETAILED DESCRIPTION

Oblivious permutation is a cryptographic technique that enables parties to collaboratively permute a sequence of elements (e.g., a vector) while ensuring that each party gains a secret share of the permuted sequence, without directly learning the permuted sequence. For example, a first party of a secure multi-party computation (MPC) instance provides the permutation (***π***), and a second party of the secure MPC instance provides an input vector (x), while neither party can learn about the other party's input. As a result, neither party can independently reconstruct the permuted vector ***π***(***x***). In some cases, oblivious permutation can be a fundamental building block in various secure MPC protocols, such as protocols for shuffling, sorting, and performing joins.

Recent advancements in oblivious permutation research have led to the development of protocols based on homomorphic encryption, Benes networks, function secret sharing, and punctured pseudorandom functions (PRF). However, the above protocols may still have computational or communicational complexity.

The present disclosure provides techniques to implement oblivious permutation with better efficiency. In some implementations, the oblivious permutation can be implemented based on a switching network. As an example, a first party (P0) participating in the secure MPC can obtain *q* control bits corresponding to *q* switches of the switching network. The q control bits can be obtained based on a permutation (*π*) to permute a sequence of *n* elements.

For each switch of the switching network, the first party receives, based on a control bit of the switch through oblivious transfer (OT), a random number selected from a first random number or a second random number. The first party further receives a first input through a first input wire of the first switch, and a second input through a second input wire of the first switch. The first input can be generated, by a second party (P1) of the secure MPC, based on a first mask corresponding to the first input wire. The second input can be generated, by the second party, based on a second mask corresponding to the second input wire. In addition, the first party receives a correction word of the first switch. The correction word can be generated, by the second party, based on the second random number, the first mask, and a fourth mask corresponding to a second output wire of the first switch. In the case where the first random number is selected as the random number, the first party generates a first output based on the first input and the first random number, and generates a second output based on the second input and the first random number. In the case where the second random number is selected as the random number, the first party generates the first output based on the first input, the second random number, and the correction word, and generates the second output based on the second input, the second random number and the correction word.

The described techniques can achieve one or more technical benefits/advantages. For example, the oblivious permutation protocols provided in the present disclosure can reduce total communication overhead (in some cases, reducing the commutation overhead approximately by half), while not incurring additional communication rounds. As such, the disclosed protocols can be efficient for practice uses. In some implementations, compared to conventional schemes, the described techniques can reduce communication costs. For example, communication costs for evaluating one permute switch using the described techniques can be O(*l*) bits, where O can stand for a growth rate function of the communication cost relative to the size (*l*) of the input data, while in comparison, communication costs for evaluating one permute switch using a conventional scheme may be O(2*l*) bits. Further, the communication complexity of evaluating one oblivious permute switch using the described techniques may be (*l* + 1), while in comparison, the communication complexity of evaluating one oblivious permute switch using a convention scheme may be (2*l* + 1). For another example, based on a switching network having no more than (*n · log₂*(n) - *n*/2) switches, the communication complexity of performing oblivious permutation using the described techniques can be (*n · log₂*(n) - *n*/*2)* * *l + nl* + *n*, while in comparison, the communication complexity of performing oblivious permutation using a convention scheme may be (*n · log₂*(n) *- n*/2) * *2l + nl + n.*

Further, in a semi-honest security system, parties follow the protocol honestly but may attempt to learn more information about the other party's input data. The oblivious permutation protocols provided in the present disclosure can offer security against semi-honest and computationally bounded adversaries, thereby providing a strong level of security for real-world applications, e.g., for real-world two-party computation (2PC) applications.

In addition, the disclosed techniques can be versatile and suitable for a wide range of use cases where arbitrary data permutations are required. For example, while the protocols are described using two-power modulus (e.g., Arithmetic sharing in Algorithm 2), the disclosed techniques can be generalized to other types of moduli, such as prime moduli, without loss of generality. Further, while the protocols are described in the present disclosure to handle even-sized datasets, a switching network capable of handling arbitrary-length permutations can be constructed based on permute switch gates to support injective functions, so that the disclosed techniques can be extended to handle datasets of any size. In some implementations, different or additional benefits/advantages may be achieved.

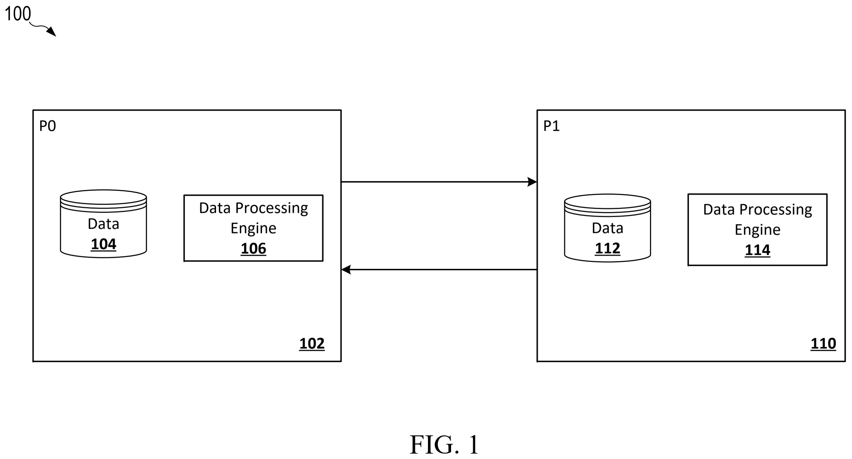

FIG. 1 is a diagram of an example multi-party computation (MPC) system 100. MPC techniques allow parties to jointly evaluate a function with their private inputs without sharing those private inputs with the other parties. In some implementations, secret sharing is used to provide data privacy. As a simple illustrative example, assume a number of parties working for a company wish to find their average number of countries visited without revealing their own number of countries to any other party. The private data of each participant can be a number representing their number of countries. Each participant divides their number of countries visited into shares, referred to as secret shares. The shares can be random numbers with the constraint being that the combination of some operation on the shares is equal to the private data, i.e., their number of countries in this example. The operation can be, for example, an arithmetic sum or an exclusive OR. For example, using additive shares, if party 1 has visited 10 countries, the shares can be 1, 3, 4, 2, which sum to 10.

If there are four participants, each participant can divide their private data, i.e., number of countries visited, into four shares. The shares are then divided among the parties. Thus, each party has four shares: one of their shares and one share from each other party. By themselves the shares are meaningless random numbers. Each party then combines the values of their shares and reveals that result to the other participants. Each party then has four results, which also provides the total of all the private data values, in other words, the combined private data of all the countries visited. Knowing the total number of countries visited, the parties can then compute a particular function to operate on the information, e.g., divide by four and get the average number of countries visited, without the private information for any individual party being revealed.

While in multi-party computation, any suitable number of parties can cooperate, for simplicity the multi-party computation system 100 is illustrated with two parties: a first party 102 and a second party 110. The parties can represent, for example, entities that seek to collaborate on data without revealing private data of either party. One example could be a government agency and a university. The government agency may have a lot of private data, for example, the Census Bureau can have large amounts of private data collected from a population. The university may wish to perform research that includes operations such as statistical analysis performed on a dataset of the Census Bureau.

In a typical MPC system, each party jointly computes an agreed-upon function. However, each party only knows the result of the function and their own input. Thus, the first party 102 cannot learn the input of the second party 110, and vice versa. Secret sharing is typically used to evaluate the computation such that each party obtains a share of the output, which when combined reveals the plain output.

Referring to FIG. 1, the first party 102 includes data store 104 and a data processing engine 106. Similarly, the second party 110 includes data store 112 and a data processing engine 114. Each party can use their respective data processing engine to perform one or more functions on data from the data store. For example, the data processing engine 106 can perform one or more functions on a dataset from data store 104. The result of the function can be secret shared with the second party 110.

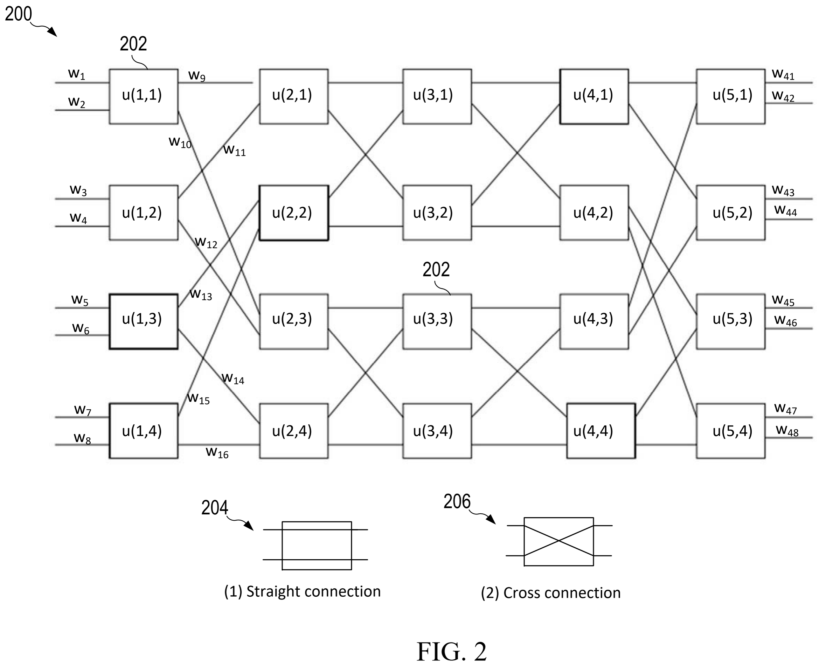

FIG. 2 is an example switching network 200. A switching network 200 can be a multi-layered system that connects multiple input terminals to output terminals by interconnected switches. The switching network 200 can be configured to transfer data from one input terminal to a specific output terminal, through routings formed by the interconnected switches. In some implementation, a switching network can be blocking, non-blocking, or re-arrangeable, depending on the intended function of the switching network.

In some implementations, the switching network 200 can include switches 202 (e.g., a 2x2 switch having two inputs and two outputs) arranged in layers, with fixed interconnections between adjacent layers of switches. In some implementations, each 2x2 switch 202 can receive two inputs and generate two outputs. Each switch 202 can be controlled by a binary setting (e.g., by a control bit). In a first setting (e.g., when the control bit is 0), the switch 202 can be configured in a straight connection mode 204, where the first input is connected with the first output, and the second input is connected with the second output, such that the switch 202 does not swap the two inputs. In a second setting (e.g., when the control bit is 1), the switch 202 can be configured in a cross connection mode 206, where the first input is connected with the second output, and the second input is connected with the first output, such that the switch 202 can swap the two inputs. By combining the switches 202 across different layers, the switching network 200 can direct data from the input terminals (e.g., the inputs to the first layer of switches) to the output terminals (e.g., the outputs of the last layer of switches)). In some implementations, a switch 202 can be a *kxk* switch that can receive *k* inputs and generate *k* outputs, where *k* is an integer, with corresponding control bits (e.g., *l*>= log2(k)). The switching network 200 can be constructed based on *kxk* switches with respective control bits accordingly.

In some implementations, the switches 202 can be connected with one another through links or interfaces (also referred to as wires), such that an output of a switch 202 of a current layer can be an input of a switch 202 of a subsequent layer. In some implementations, the wires between the switches can be fixed or predetermined based on desired routings among the switches 202 to implement a desired data transfer function such as a permutation. By configuring the switches 202 in the straight connection mode or the cross-connection mode, the switching network 200 can direct data from input terminals to different output terminals.

In some implementations, the switching network 200 can be a universal switching network. A universal switching network can be configured to implement, perform or otherwise represent permutation (also known as shuffling). A permutation can be a one-to-one mapping of *n* input elements to *n* output positions that rearranges the order of the input elements without adding or removing any elements. For example, each input position is mapped to a unique output position, and every output position receives exactly one input element. As an example, if the input elements are arranged as [*x*₁, *x*₂, *x*₃, *x*₄], a possible permutation can produce the output [x₃, *x*₁, *x*₄, *x*₂], where the first input moves to the second position, the second input moves to the fourth position, and so on. In some implementations, a universal switching network can implement any of the *n*! possible permutations over *n* input elements by configuring the binary settings of the switches 202. In some cases, a permutation is fixed and known. In some other cases, such as in cryptographic or privacy-preserving systems, the permutation may be secret or randomly chosen.

A Benes network can be an example of a universal switching network. In some implementations, a Benes network can support network sizes where the number of input elements is a power of 2 (*n* = 2*^{r}*, where *r* is a positive integer). The Benes network can include (2*r* - 1) layers of switches 202, where each layer can include *n*/2 switches 202. In some implementations, the interconnection pattern between adjacent layers can be symmetric, with the same pattern mirrored around the middle stage, or asymmetric. To implement a target permutation by a Benes network, control bits that each correspond to a respective switch 202 of the Benes network can be computed based on the target permutation, such that the Benes network can rearrange the n input elements according to the target permutation.

For illustration purpose, FIG. 2 shows an 8x8 Benes network configured to permute 8 input elements as an example switching network 200. The first layer of switches (e.g., input switches) include switches u(1,1), u(1,2), u(1,3), and u(1,4), and the last layer of switches (e.g., output switches) include switches u(5,1), u(5,2), u(5,3), and u(5,4). Switches between the first layer and the last layer may be referred to as intermediate switches.

As shown in FIG. 2, switch u(1,1) can receive its first input through wire w₁, receive its second input through wire w₂, send its first output through wire w₉ to switch u(2,1), and send its second output through wire w₁₀ to switch u(2,3); switch u(1,2) can receive its first input through wire w₃, receive its second input through wire w₄, send its first output through wire w₁₁ to switch u(2,1), and send its second output through wire w₁₀ to switch u(2,3); and so on.

It should be noted that the switching network 200 can be configured to permute a different number of input elements (e.g., an even number that is not a power of 2, or an odd number) and thereby having a different network structure. For example, the switching network 200 can include a different number of switches 202 and a different interconnection pattern between different layers of switches 202.

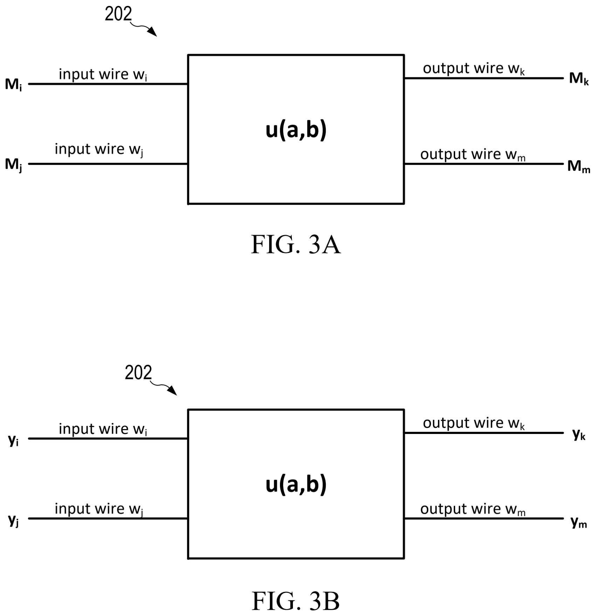

FIGS. 3A-3B illustrate an example switch 202 of a switching network 200. Switch u(a,b) is used as an example switch 202, where a, b are positive integers. Switch u(a,b) can receive its first input through a first input wire wᵢ, receive its second input through a second input wire wⱼ, send its first output through a first output wire wₖ, and send its second output through a second output wire wₘ.

In some implementations, the switching network 200 can be used to implement an oblivious permutation in a secure MPC instance, where a sequence of input elements is permuted (e.g., rearranged) without revealing the permutation pattern to other parties of the secure MPC instance. For example, a first party of the secure MPC instance may have the sequence of input elements, and a second party of the secure MPC instance may have the permutation pattern. By implementing the oblivious permutation, the sequence of input elements can be permuted according to the permutation pattern, while no party of the secure MPC instance can individually determine how the input elements correspond to the output positions. In some implementations, as explained in detail with reference to Algorithm 1 and Algorithm 2, one party (e.g., P1) of the secure MPC instance can generate masks (e.g., *Mᵢ, Mⱼ, Mₖ, Mₘ*) corresponding to wires of the switch u(a,b), another party (e.g., P0) of the secure MPC instance can determine inputs (e.g., *yᵢ* and *yⱼ*) and outputs (e.g., *yₖ* and *yₘ*) of the switch u(a,b). In some implementations, the inputs and the outputs are masked with corresponding masks of the input and output wires.

Algorithm 1 describes an example process of implementing oblivious permutation in a secure MPC setting. In some implementations, the secure MPC can be computed based on Boolean sharing (also referred to as Boolean secure sharing).

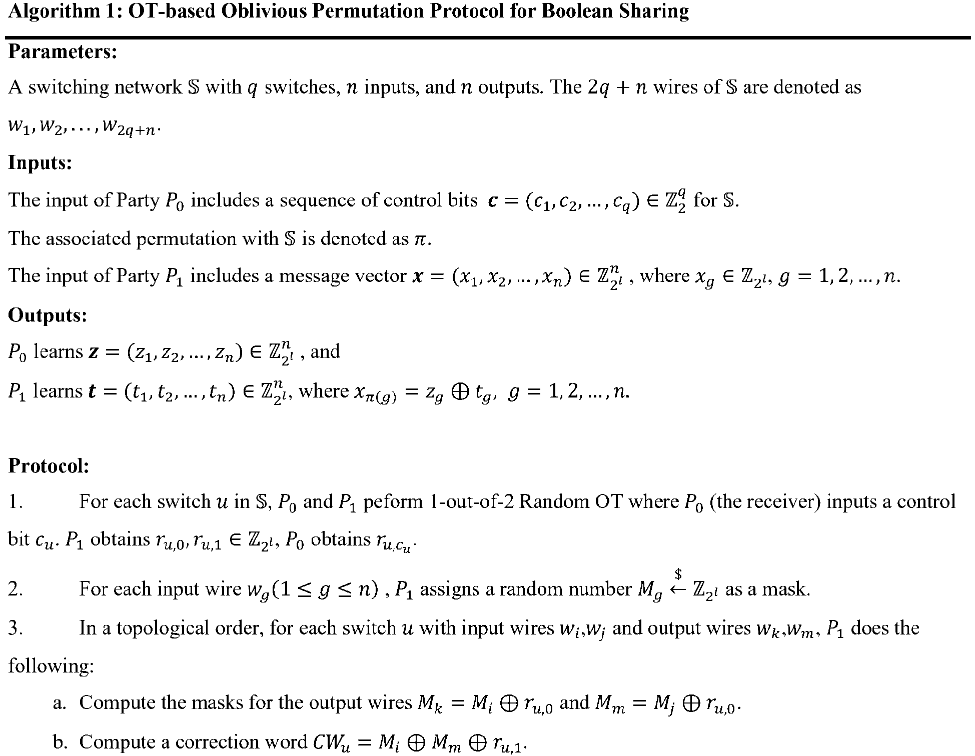

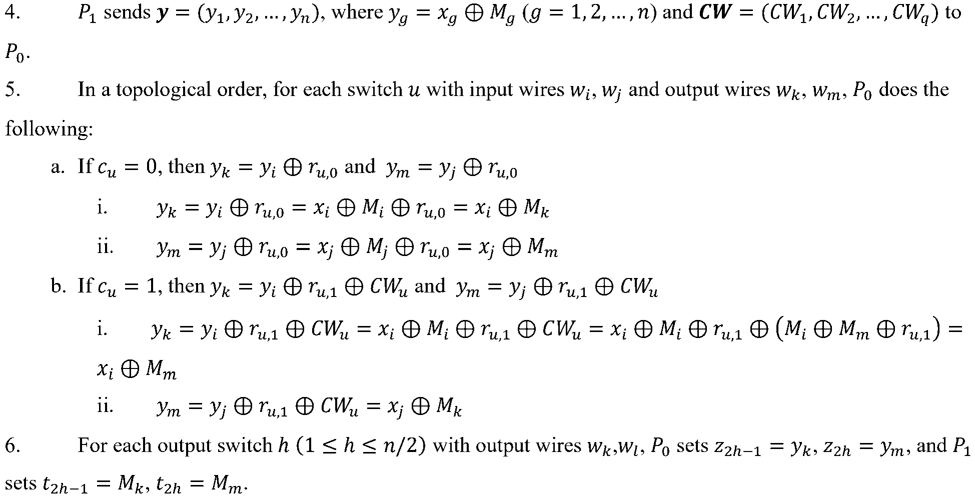

As shown in the process described by Algorithm 1, a first party (P0) of the secure MPC instance has a permutation (*π*) that maps each of *n* input positions to a corresponding output position. Based on the permutation (*π*), P0 can obtain a sequence of control bits $c = \left({c}_{1},{c}_{2},…,{c}_{q}\right) ∈ {ℤ}_{2}^{q}$ for a switching network (e.g., the switching network 200 of FIG. 2) having q switches (e.g., switches 202 of FIGS. 2-3B). The switching network can be configured to permute a sequence of *n* input elements. The switching network having q switches and configured to permute *n* input elements can have (2*q* + *n*) wires connecting between the switches. A second party (P1) of the secure MPC instance can have a sequence of *n* data elements $x = \left({x}_{1},{x}_{2},…,{x}_{n}\right) ∈ {ℤ}_{{2}^{l}}^{n}$. Each data element can include *l* bits, or can be a value on a ring with width being *l.* In some implementations, the sequence of *n* data elements can be a message vector having *n* elements.

Each control bit *cᵤ* (*u* = 1, 2,..,*q*) can be a binary bit indicating a setting of a corresponding switch of the switching network. For example, if the control bit *cᵤ* corresponding to switch u(a,b) is 0, switch u(a,b) can be configured in a straight connection mode (e.g., straight connection mode 204) such that the switch 202 does not swap the two inputs. If the control bit *cᵤ* corresponding to switch u(a,b) is 1, switch u(a,b) can be configured in a cross connection mode (e.g., cross connection mode 206) such that the switch 202 swaps the two inputs. In some implementations, the control bit being 0 can indicate a cross connection mode of the corresponding switch, while the control bit being 1 can indicate a straight connection mode of the corresponding switch.

At step 1 of Algorithm 1, for each switch, P0 and P1 can invoke a 1-out-of-2 random oblivious transfer (OT) protocol, where P1 obtains a first random number ( ${r}_{u , 0} ∈ {ℤ}_{{2}^{l}}$) and a second random number ( ${r}_{u , 1} ∈ {ℤ}_{{2}^{l}}$), and P0 obtains one of *r*_{*u*,0} or *r*_{*u*,1} from P1 as *r*_{*u*,*c*ᵤ}. *r_{u,cᵤ}* is obtained based on the control bit (*cᵤ*) of the switch. For example, if *cᵤ* = 0, P0 obtains *r*_{*u*,0} from P1 as *r_{u,cᵤ};* if *cᵤ* = 1, P0 obtains *r*_{*u,*1} from P1 as *r_{u,cᵤ}.*

In some implementations, P1 can generate a mask for each wire of the switching network. The masks can be used to cover up, hide, or otherwise encrypt the data elements when passing through the switching network, so that P0 does not directly learn the data elements during the permutation. In some implementations, each mask can include *l* bits. With reference to FIG. 3A, for the switch u(a,b), P1 can generate a first mask (*Mᵢ*) for the first input wire wᵢ, a second mask (*Mⱼ*) for the second input wire wⱼ, a third mask (*Mₖ*) for the first output wire wₖ, and a fourth mask (*Mₘ*) for the second output wire wₘ.

At step 2 of Algorithm 1, for each input wire (e.g., *w*₁ to *w₈* of FIG. 2) of the first layer of switches, P1 assigns a random number having *l* bits as a mask. As an example shown in FIG. 2, P1 can assign 8 random numbers as masks *M*₁, *M*₂, *..., M*₈ for wires *w*₁ to *w*₈.

At step 3.a of Algorithm 1, P1 can determine masks for the rest of the wires, e.g., in a topological order (e.g., from the first layer to the last layer of the switching network). For example, after obtaining masks for input wires (e.g., *w*₁ to *w₈* of FIG. 2) of switches of the first layer, P1 can obtain masks for output wires (e.g., *w*₉ to *w*₁₆ of FIG. 2) of switches of the first layer, and move on to determine masks for input wires an output wires of the second layer, and so on, and finally obtain masks for output wires (e.g., *w*₄₁ to *w*₄₈ of FIG. 2) of switches of the last layer.

With reference to FIG. 3A, using switch u(a,b) as an example, P1 can determine the mask (*Mₖ*) corresponding to the first output wire (wₖ) based on the mask (*Mᵢ*) corresponding to the first input wire (wᵢ) and the first random number (*r_{u,0}*), and determine the mask (*Mₘ*) corresponding to the second output wire (wₘ) based the mask (*Mⱼ*) corresponding to the second input wire (wⱼ) and the first random number (*r*_{*u*,0}). In some implementations, P1 can perform exclusive OR (XOR) operations to obtain *Mₖ* and *Mₘ*, such that *Mₖ = Mᵢ* ⊗ *r*_{*u,*0}, and *Mₘ = Mⱼ* ⊗ *r*_{*u,*0},

At step 3.b of Algorithm 1, P1 can determine a correction word for each switch. Each correction word can have *l* bits. With reference to FIG. 3A, using switch u(a,b) as an example, P1 can determine the correction word (CWᵤ) for switch u(a,b) based on the mask (*Mᵢ*) corresponding to the first input wire (wᵢ), the mask (*Mₘ*) corresponding to the second output wire (wₘ), and the second random number (*r*_{*u*,1}). In some implementations, P1 can perform an XOR operations to obtain CWᵤ, such that CW*ᵤ* = *Mᵢ* ⊗ *Mₘ* ⊗ *r*_{*u*,1}.

At step 4 of Algorithm 1, P1 can send a masked sequence *y* = (*y*₁, *y*₂, ... , *yₙ*) to P0. Each element *y_{g}* (*g =* 1, 2, ..., *n*) in the masked sequence y can be generated based on a corresponding data element (*x_{g}*) in the sequence *x =* (*x₁, x₂, ... , xₙ*) and a mask (e.g., *M_{g}*) corresponding to an input wire of an input switch. In some implementations, P1 can perform XOR operations to generate ***y** =* (*y*₁, *y*₂, ... , *yₙ*), such that *y_{g} = x_{g}* ⊗ *M_{g}* (*g =* 1, 2, ... , *n*).

Further, P1 can send a sequence of correction words ***CW** =* (*CW*₁, *CW*₂, ..., *CW_{q}*) to P0. Each correction word corresponds to a switch of the switching network.

At step 5 of Algorithm 1, upon receiving the masked sequence y and the sequence of correction words ***CW*,** P0 can perform permutation on the masked sequence. In some implementations, P0 can perform permutation based on a topological order, where elements in the masked sequence ***y** are* sent to the first layer of switches (e.g., u(1,1), u(1,2), u(1,3), and u(1,4) of FIG. 2) as inputs to obtain outputs from the first layer of switches; outputs from the first layer of switches are sent to the second layer of switches (e.g., u(2,1), u(2,2), u(2,3), and u(2,4) of FIG. 2), according to the wire connections between the first layer and the second layer, as inputs of the second layer of switches; ..., until obtaining outputs from the last layers of switches (e.g., u(5,1), u(5,2), u(5,3), and u(5,4) of FIG. 2).

With reference to FIG. 3B, using switch u(a,b) as an example, when *cᵤ =* 0, that is, *r_{u,cᵤ}* = *r*_{*u,*0}, P0 can generate the output (*yₖ*) of the first output wire (wₖ) based on the input (*yᵢ*) of the first input wire and the first random number (*r_{u,0}*), and generate the output (*yₘ*) of the second output wire (wₘ) based on the input (*yⱼ*) of the second input wire and the first random number (*r*_{*u,*0}). In some implementations, P0 can perform XOR operations to obtain *yₖ* and *yₘ*, such that *yₖ = yᵢ* ⊕ *r*_{*u*,0} and *yₘ = yⱼ* ⊕ *r*_{*u,*0} . As such, when *cᵤ =* 0, which indicates a straight connection mode of the switch u(a,b), *yₖ = xᵢ* ⊕ *Mₖ* and *yₘ = xⱼ* ⊕ *Mₘ.*

When *cᵤ* = 1, that is, *r_{u,cᵤ}* = *r*_{*u*,1}, P0 can generate the output (*yₖ*) of the first output wire (wₖ) based on the input (*yᵢ*) of the first input wire, the correction word (CWᵤ), and the second random number (*r*_{*u*,1}), and generate the output (*yₘ*) of the second output wire (wₘ) based on the input (*yⱼ*) of the second input wire, the correction word (CWᵤ), and the second random number (*r*_{*u*,1}). In some implementations, P0 can perform XOR operations to obtain *yₖ* and *yₘ*, such that *yₖ = yᵢ* ⊕ *r*_{*u*,1} ⊕ CW*ᵤ* and *yₘ = yⱼ* ⊕ *r*_{*u*,1} ⊕ *CWᵤ.* As such, when *cᵤ* = 1, which indicates a cross connection mode of the switch u(a,b), *yₖ = xᵢ* ⊕ *Mₘ* and *yₘ = xⱼ* ⊕ *Mₖ.*

At step 6 of Algorithm 1, after obtaining outputs from the last layer of switches, P0 can set the n outputs of the last layer of switches as a sequence ***z*** = (*z*₁, *z*₂, ..., *zₙ*). For example, for the *h^{th}* switch of the last layer ( $h = 1 , 2 , … , \frac{n}{2}$ ) having a first output *yₖ* and a second output *yₘ* , *P*₀ sets *z₂ₕ₋₁ = yₖ, z₂ₕ = yₘ.* Further P1 can set the *n* masks of the output wires of the last layer of switches as a sequence ***t** =* (*t*₁,*t*₂,...,*tₙ*). For example, for the *h^{th}* switch of the last layer ( $h = 1 , 2 , … , \frac{n}{2}$) having a first output wire wₖ and a second output wire wₘ, *P*₀ sets *t*_{*2h*-1} = *Mₖ, t₂ₕ = Mₘ*. As such, P0 and P1 can jointly determine a permuted sequence ***π***(***x***) *=* (*x*_{*π*(1)}, *x*_{*π*(2)}, ... , *x*_{*π*(*n*)}) that is rearranged according to the permutation *π.* In some implementations, the sequence z = (*z*₁,*z*₂,...,*zₙ*) possessed by P0 can be a first secret share (e.g., a Boolean share) of the permuted sequence ***π***(***x***), and the sequence ***t** =* (*t*₁,*t*₂,...,*tₙ*) possessed by P1 can be a second secret share (e.g., a Boolean share) of the permuted sequence ***π*(*x*),** such that *x*_{*π*(*g*)} *= z_{g}* ⊕ *t_{g}, g =* 1, 2, ..., *n.*

**Algorithm 2** describes another example process of implementing oblivious permutation in a secure MPC setting. In some implementations, the secure MPC can be computed based on Arithmetic sharing (also referred to as Arithmetic secure sharing).

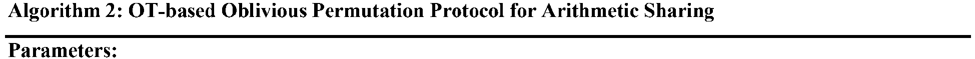

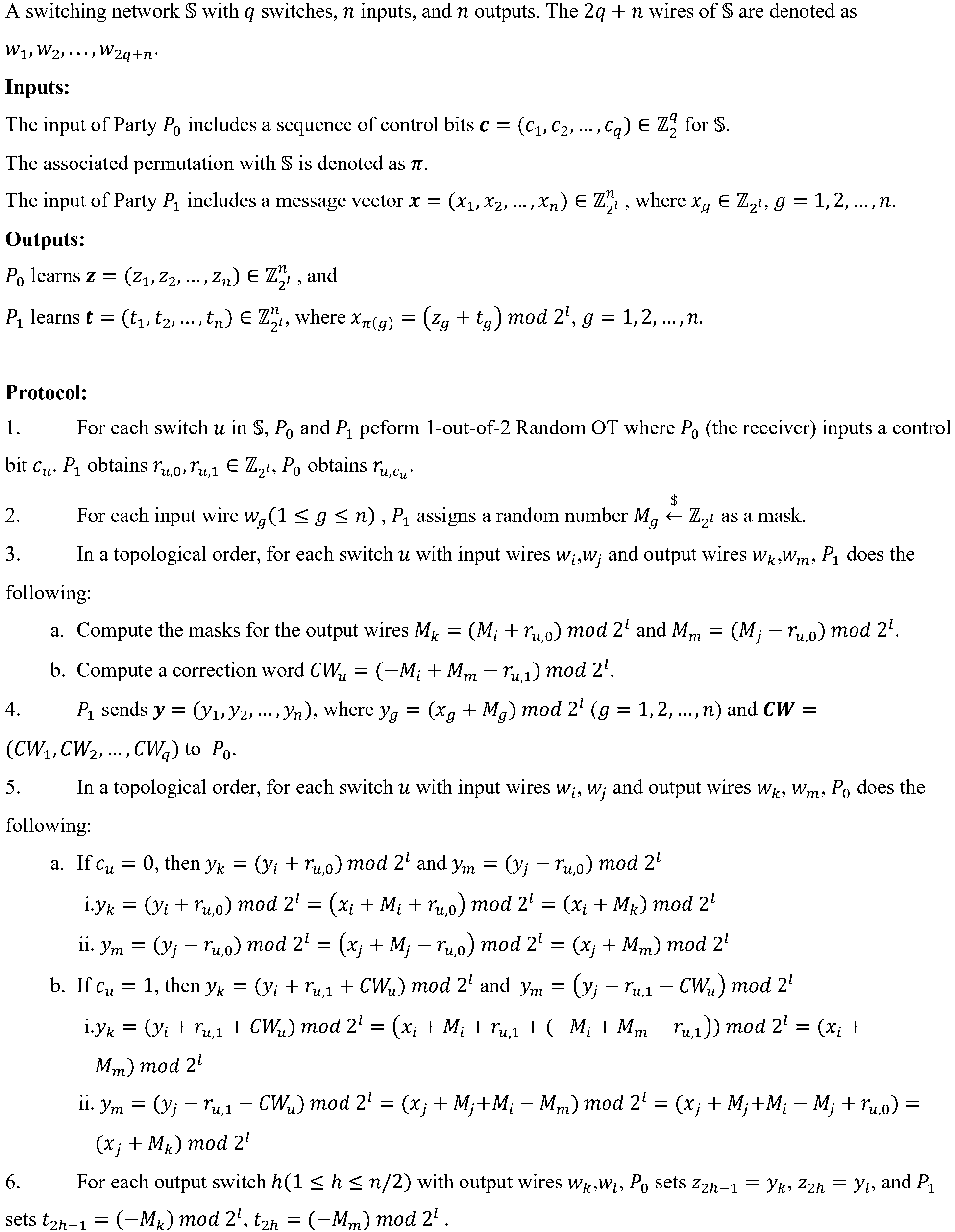

Similar to Algorithm 1, in the process described by Algorithm 2, a first party (P0) of the secure MPC instance has a permutation (*π*) that maps each of *n* input positions to a corresponding output position. Based on the permutation (*π*), P0 can obtain a sequence of control bits $c = \left({c}_{1},{c}_{2},…,{c}_{q}\right) ∈ {ℤ}_{2}^{q}$ for a switching network (e.g., the switching network 200 of FIG. 2) having *q* switches (e.g., switches 202 of FIGS. 2-3B). The switching network can be configured to permute a sequence of *n* input elements. The switching network having *q* switches and configured to permute *n* input elements can have (2*q* + *n*) wires connecting between the switches. A second party (P1) of the secure MPC instance can have a sequence of *n* data elements $x = \left({x}_{1},{x}_{2},…,{x}_{n}\right) ∈ {ℤ}_{{2}^{l}}^{n}$. Each data element can include *l* bits, or can be a value on a ring with width being *l.* In some implementations, the sequence of *n* data elements can be a message vector having *n* elements.

At step 1 of Algorithm 2, for each switch, P0 and P1 can invoke a 1-out-of-2 random oblivious transfer (OT) protocol, where P1 obtains a first random number ( ${r}_{u , 0} ∈ {ℤ}_{{2}^{l}}$) and a second random number ( ${r}_{u , 1} ∈ {ℤ}_{{2}^{l}}$), and P0 obtains one of *r*_{*u*,0} or *r*_{*u*,1} from P1 as *r_{u,cᵤ} . r_{u,cᵤ}* is obtained based on the control bit (*cᵤ*) of the switch. For example, if *cᵤ* = 0, P0 obtains *r*_{*u*,0} from P1 as *r_{u,cᵤ};* if *cᵤ* = 1, P0 obtains *r*_{*u,*1} from P1 as *r_{u,cᵤ}.*

In some implementations, P1 can generate a mask for each wire of the switching network. Each mask can be a value on a ring with width being *l.* With reference to FIG. 3A, for the switch u(a,b), P1 can generate a first mask (*Mᵢ*) for the first input wire wᵢ, a second mask (*Mⱼ*) for the second input wire wⱼ, a third mask (*Mₖ*) for the first output wire wₖ, and a fourth mask (*Mₘ*) for the second output wire wₘ.

At step 2 of Algorithm 2, for each input wire (e.g., *w*₁ to *w*₈ of FIG. 2) of the first layer of switches, P1 assigns a random number on the *l*-width ring. As an example shown in FIG. 8, P1 can assign 8 random numbers as *M*₁, *M*₂, ..., *M*₈ for wires *w*₁ to *w*₈.

At step 3.a of Algorithm 2, P1 can determine masks for the rest of the wires, e.g., in a topological order. For example, after obtaining masks for input wires (e.g., *w*₁ to *w*₈ of FIG. 2) of switches of the first layer, P1 can obtain masks for output wires (e.g., *w*₉ to *w*₁₆ of FIG. 2) of switches of the first layer, ..., and finally obtain masks for output wires (e.g., *w*₄₁ to *w*₄₈ of FIG. 2) of switches of the last layer.

With reference to FIG. 3A, using switch u(a,b) as an example, P1 can determine the mask (*Mₖ*) corresponding to the first output wire (wₖ) based on the mask (*Mᵢ*) corresponding to the first input wire (wᵢ) and the first random number (*r_{u,0}*), and determine the mask (*Mₘ*) corresponding to the second output wire (wₘ) based the mask (*Mⱼ*) corresponding to the second input wire (wⱼ) and the first random number (*r*_{*u*,0}). In some implementations, P1 can perform addition and subtraction to obtain *Mₖ* and *Mₘ*, such that *Mₖ =* (*Mᵢ + r*_{*u,*0}) *mod* 2*^{l}*, and *Mₘ =* (*Mⱼ - r*_{*u,*0}) *mod* 2*^{l}*. Additions and subtractions in Algorithm 2 can be performed on the *l*-width ring.

At step 3.b of Algorithm 2, P1 can determine a correction word for each switch. Each correction word can have *l* bits. With reference to FIG. 3A, using switch u(a,b) as an example, P1 can determine the correction word (CWᵤ) for switch u(a,b) based on the mask (*Mᵢ*) corresponding to the first input wire (wᵢ), the mask (*Mₘ*) corresponding to the second output wire (wₘ), and the second random number (*r*_{*u*,1}). In some implementations, P1 can perform addition and subtraction to obtain CWᵤ, such that CW*ᵤ =* (-*Mᵢ + Mₘ - r*_{*u*,1}) *mod* 2*^{l}*.

At step 4 of Algorithm 1, P1 can send a masked sequence ***y*** = (*y*₁, *y*₂, ..., *yₙ*) to P0. Each element *y_{g}* (*g =* 1, 2, ..., *n*) in the masked sequence y can be generated based on a corresponding data element (*x_{g}*) in the sequence ***x** =* (*x*₁,*x₂*,.*..,xₙ*) and a mask (e.g., *M_{g}*) corresponding to an input wire of an input switch. In some implementations, P1 can perform addition to generate ***y** =* (*y*₁, *y*₂, ..., *yₙ*), such that *y_{g} =* (*x_{g} + M_{g}*) *mod 2^{l}* (*g =* 1, 2, ... , n).

Further, P1 can send a sequence of correction words ***CW** =* (*CW*₁, *CW*₂ ,..., *CW_{q}*) to P0. Each correction word corresponds to a switch of the switching network.

At step 5 of Algorithm 2, upon receiving the masked sequence y and the sequence of correction words ***CW*,** P0 can perform permutation on the masked sequence. In some implementations, P0 can perform permutation based on a topological order, where elements in the masked sequence y are sent to the first layer of switches (e.g., u(1,1), u(1,2), u(1,3), and u(1,4) of FIG. 2) as inputs to obtain outputs from the first layer of switches; outputs from the first layer of switches are sent to the second layer of switches (e.g., u(2,1), u(2,2), u(2,3), and u(2,4) of FIG. 2), according to the wire connections between the first layer and the second layer, as inputs of the second layer of switches; ..., until obtaining outputs from the last layers of switches (e.g., u(5,1), u(5,2), u(5,3), and u(5,4) of FIG. 2).

With reference to FIG. 3B, using switch u(a,b) as an example, when *cᵤ =* 0, that is, *r_{u,cᵤ}* = *r*_{*u,*0}, P0 can generate the output (*yₖ*) of the first output wire (wₖ) based on the input (*yᵢ*) of the first input wire and the first random number (*r_{u,0}*), and generate the output (*yₘ*) of the second output wire (wₘ) based on the input (*yⱼ*) of the second input wire and the first random number (*r*_{*u*,0}). In some implementations, P0 can perform addition and subtraction to obtain *yₖ* and *yₘ*, such that *yₖ* = (*yᵢ* + *r*_{*u,*0}) *mod 2^{l}* and *yₘ =* (*yⱼ* - *r*_{*u,*0}) *mod* 2*^{l}*. As such, when *cᵤ* = 0, which indicates a straight connection mode of the switch u(a,b), *yₖ* = (*xᵢ + Mₖ*) *mod 2^{l}* and *yₘ =* (*xⱼ + Mₘ*) *mod* 2*^{l}*.

When *cᵤ* = 1, that is, *r_{u,cᵤ}* = *r*_{*u*,1}, P0 can generate the output (*yₖ*) of the first output wire (wₖ) based on the input (*yᵢ*) of the first input wire, the correction word (CWᵤ), and the second random number (*r_{u,i}*), and generate the output (*yₘ*) of the second output wire (wₘ) based on the input (*yⱼ*) of the second input wire the correction word (CWᵤ), and the second random number (*r_{u,i}*). In some implementations, P0 can perform addition and subtraction to obtain *yₖ* and *yₘ*, such that *yₖ =* (*yᵢ* + *r*_{*u*,1} *+ CWᵤ*) *mod 2^{l}* and *yₘ =* (*yⱼ* - *r*_{*u*,1} - *CWᵤ*) *mod* 2*^{l}*. As such, when *cᵤ* = 1, which indicates a cross connection mode of the switch u(a,b), *yₖ* = (*xᵢ + Mₘ*) *mod 2^{l}* and *yₘ =* (*xⱼ + Mₖ*) *mod* 2*^{l}*.

At step 6 of Algorithm 1, after obtaining outputs from the last layer of switches, P0 can set the n outputs of the last layer of switches as a sequence ***z*** = (*z*₁, *z*₂, ..., *zₙ*). For example, for the *h^{th}* switch of the last layer ( $h = 1 , 2 , … , \frac{n}{2}$ ) having a first output *yₖ* and a second output *yₘ* , *P*₀ sets *z*_{2*h*-1} *= yₖ, z*₂*ₕ = yₘ.* Further P1 can set the *n* masks of the output wires of the last layer of switches as a sequence ***t** =* (*t*₁, *t*₂, ..., *tₙ*). For example, for the *h^{th}* switch of the last layer ( $h = 1 , 2 , … , \frac{n}{2}$) having a first output wire wₖ and a second output wire wₘ , *P*₀ sets *t*_{*2h*-1} *=* (*-Mₖ*) *mod* 2*^{l}*, *t*_{2*h*} = (-*Mₘ*) *mod* 2*^{l}*. As such, P0 and P1 can jointly determine a permuted sequence ***π*(*x*)** *=* (*x*_{*π*(1)}, *x*_{*π*(2)},...,*x*_{π(*n*)}) that is rearranged according to the permutation *π.* In some implementations, the sequence ***z*** = (*z*₁, *z*₂, ..., *zₙ*) possessed by P0 can be a first secret share (e.g., an Arithmetic share) of the permuted sequence ***π***(***x***), and the sequence ***t** =* (*t*₁*,*t₂, ... , *tₙ*) possessed by P1 can be a second secret share (e.g., an Arithmetic share) of the permuted sequence ***π***(***x***), such that *x*_{π}*_{(g)} =* (*z_{g} + t_{g}*) *mod* 2*^{l}*, *g* = 1, 2, ..., *n*.

**In** some implementations, the processes described in Algorithm 1 and Algorithm 2 can be implemented by a secure two-party computation (2PC) instance, where two parties participate in the secure computation. In some other implementations, the process described in Algorithm 1 can be implemented by a secure multi-party computation instance where more than two parties participate in the secure computation.

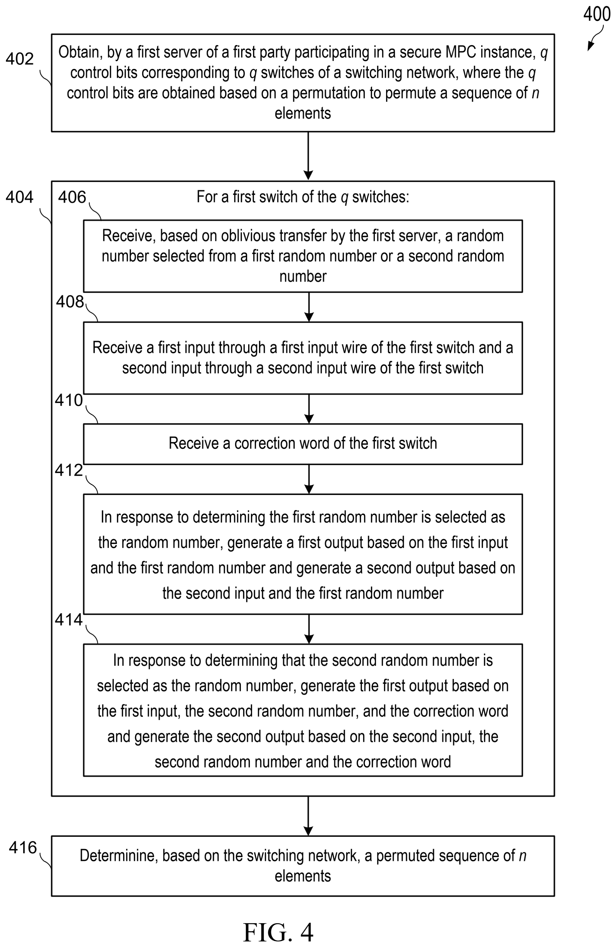

FIG. 4 is a flow diagram of an example process 400 of performing oblivious permutation. The example process 400 can be used for permuting a sequence of data elements in a secure MPC instance, where no party can individually determine how the data elements are permuted to the output positions. The operations shown in process 400 may not be exhaustive and that other operations can be performed as well before, after, or in between any of the illustrated operations. Further, some of the operations may be omitted, performed simultaneously, or in a different order than shown in FIG. 4.

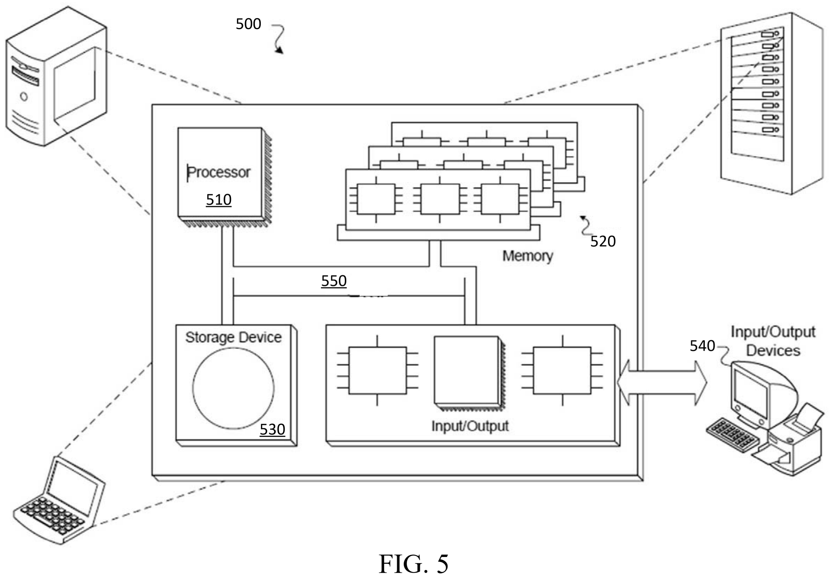

For convenience, the process 400 will be described as being performed by a system of one or more computers (e.g., a server implemented by a computer system 500 of FIG. 5), located in one or more locations, and programmed appropriately in accordance with this specification. For example, a multi-party computation system, e.g., the multi-party computation system 100 of FIG. 1, appropriately programmed, can perform the process 400.

In particular, the process 400 is described from the perspective of a first party, e.g., a first party P0, implemented by a first server, of the multi-party computation system. Operations of another party, e.g., a second party P1, implemented by a second server, of the multi-party computation system can be determined accordingly and are within the scope of this disclosure. In some implementations, the process 400 can be based on Algorithms 1 and 2 described above, for example, to perform an oblivious permutation based on a switching network (e.g., the switching network 200 of FIG. 2 or another switching network).

At 402, a first server of a first party (P0) participating in a secure multi-party computation (MPC) instance obtains *q* control bits (e.g., ***c*** = (*c*₁*, c₂, ..., c_{q}*) corresponding to q switches (e.g., switches 202 of FIGS. 2-3B) of a switching network (e.g. the switching network 200 of FIG. 2). The q control bits are obtained based on a permutation (*π*) to permute a sequence of *n* elements (e.g., $x = \left({x}_{1},{x}_{2},…,{x}_{n}\right) ∈ {ℤ}_{{2}^{l}}^{n}$), where *q* and *n* are positive integers. In some implementations, for a switching network to implement a given permutation (*π*), the *q* control bits corresponding to the *q* switches of the switching network can be determined based on known algorithms or techniques.

At 404, the sequence of *n* elements passes through each layer of switches of the switching network, where outputs of each switch can be determined. In some implementations, 404 includes 406-414 that are performed on a switch (e.g., switch u(i,j) of FIG. 2 or switch u(a,b) of FIGS. 3A-3B) of the switching network. In some implementations, some of all operations 406-414 can be performed in another or each switch of the switching network. The below example operations 406-414 are described with respect to a first switch as an example.

At 406, the first server of the first party receives, based on oblivious transfer, a random number (e.g., *r*_{*u*,cᵤ}) selected from a first random number (e.g., *r*_{*u,*0}) or a second random number (e.g., *r*_{*u*,1}). In some implementations, *r_{u,cᵤ}* is selected based on a control bit (e.g., *cᵤ*) corresponding to the first switch, such that when *cᵤ =* 0, *r*_{*u,*0} is selected as *r_{u,cᵤ}*; when *cᵤ* = 1, *r*_{*u*,1} is selected as *r_{u,cᵤ}*.

At 408, the first server of the first party receives a first input (e.g., *yᵢ*) through a first input wire (e.g., *wᵢ*) of the first switch, and receives a second input (e.g., *yⱼ*) through a second input wire (e.g., *wⱼ*) of the first switch. The first input is generated, by a second server of the second party, based on a first mask (e.g., *Mᵢ*) corresponding to the first input wire. The second input is generated, by the second server of the second party, based on a second mask (e.g., *Mⱼ*) corresponding to the second input wire.

At 410, the first server of the first party receives a correction word of the first switch. The correction word is generated, by the second server of the second party, based on the second random number, the first mask, and a fourth mask (e.g., *Mₘ*) corresponding to a second output wire (e.g., *wₘ)* of the first switch. In some implementations, a third mask (e.g., *Mₖ*) corresponding to a first output wire (e.g., *wₖ*) of the first switch is generated based on the first mask and the first random number. The fourth mask is generated based on the second mask and the first random number.

At 412, in some instances, in response to determining the first random number is selected as the random number, the first server of the first party generates a first output (e.g., *yₖ*) based on the first input and the first random number, and generates a second output (e.g., *yₘ*) based on the second input and the first random number.

At 414, in some instances, in response to determining that the second random number is selected as the random number, the first server of the first party generates the first output based on the first input, the second random number, and the correction word, and generates the second output based on the second input, the second random number and the correction word.

As mentioned above, some or all of the operations 406 to 414 can be performed by a second switch in the switching network. In some implementations, an input of the second switch can be connected to one or both of the first output and the second output of the first switch. As a first example, the first switch can be u(1,1) and the second switch can be u(2,1) or u(2,3) in FIG. 2. In some implementations, an input of the second switch can be disjoint from one or both of the first output and the second output of the first switch. As a second example, the first switch can be u(1,1) and the second switch can be u(1,2), u(1,3), or u(1,4) in FIG. 2. In some implementations, some or all of the operations 406 to 414 can be performed in series (e.g., in the first example) or in parallel (e.g., in the second example) on two or more switches in the switching network.

In some implementations, some or all of the operations 406 to 414 can be performed by each switch in the switching network until outputs of the last layer of switches of the switching network have been determined. In some implementations, the outputs of the last layer of switches of the switching network can be considered as or included in outputs of the switching network.

At 416, based on an output of the switching network, a permuted sequence of *n* elements (e.g., ***π***(***x***) *=* (*x*_{*π*(1)}, *x_{π(2)},* ... , *x*_{π(*n*)})) can be determined. In some implementations, the output of the switching network includes the permuted sequence of *n* elements that are determined based on an output of the switching network, where the output of the switching network can be determined based on the first output and the second output of the first switch, as well as first outputs and second outputs of other switches in the switching network. In some implementations, the first server of the first party can obtain a sequence ***z*** = (*z*₁, *z*₂, ... , *zₙ*) as a first secret share of the permuted sequence, where the sequence ***z*** includes *n* outputs of the last layer of switches. The second server of the first party can obtain a sequence ***t** =* (*t*₁, *t*₂, ... , *tₙ*) as a second secret share of the permuted sequence, where the sequence ***t*** includes *n* masks of the output wires of the last layer of switches.

In some implementations, the first server of the first party receives the first random number as the random number when the control bit corresponding to the first switch indicates a straight connection between input wires and output wires of the first switch (e.g., the straight connection mode 204 of FIG. 2). The first server receives the second random number as the random number when the control bit corresponding to the first switch indicates a cross connection between the input wires and the output wires of the first switch (e.g., the cross connection mode 206 of FIG. 2).

In some implementations, the oblivious transfer can be implemented based on Boolean sharing. For example, the third mask can be an exclusive OR (XOR) result of the first mask and the first random number, the fourth mask can be an XOR result of the second mask and the first random number; the correction word can be an XOR result of the first mask, the fourth mask, and the second random number; the first input can be an XOR result of the first mask and a first element (e.g., *xᵢ*) of the sequence of *n* elements; and the second input can be an XOR result of the second mask and a second element (e.g., *xⱼ*) of the sequence of *n* elements.

In response to determining the first random number is selected as the random number, the first server of the first party can compute an XOR result of the first input and the first random number as the first output, and compute an XOR result of the second input and the first random number as the second output. In response to determining the second random number is selected as the random number, the first server of the first party can compute an XOR result of the first input, the second random number, and the correction word as the first output, and compute an XOR result of the second input, the second random number, and the correction word as the second output.

As such, if the first server of the first party receives the first random number as the random number, the first output is an XOR result of the first element and the third mask, and the second output is an XOR result of the second element and the fourth mask. If the first server receives the second random number as the random number,
the first output is an XOR result of the first element and the fourth mask, and the second output is an XOR result of the second element and the third mask.

In some implementations, the oblivious transfer can be implemented based on Arithmetic sharing. For example, the third mask can be a sum of the first mask and the first random number; the fourth mask can be difference between the second mask and the first random number; the correction word can be a difference between the fourth mask and a sum of the first mask and the second random number; the first input can be a sum of the first mask and a first element (e.g., *xᵢ*) of the sequence of *n* elements; and the second input can be a sum of the second mask and a second element (e.g., *xⱼ*) of the sequence of *n* elements. The sums and the differences are calculated over a ring of *l* bits, where the first mask, the second mask, the third mask and the fourth mask each comprise *l* bits.

In response to determining the first random number is selected as the random number, the first server of the first party can compute a sum of the first input and the first random number as the first output, and compute a difference between the second input and the first random number as the second output. In response to determining the second random number is selected as the random number, the first server of the first party can compute a sum of the first input, the second random number, and the correction word as the first output, and compute a difference between the second input and a sum of the second random number and the correction word as the second output.

As such, if the first server of the first party receives the first random number as the random number, the first output is a sum of the first element and the third mask, and the second output is a sum of the second element and the fourth mask. If the first server receives the second random number as the random number, the first output is a sum result of the first element and the fourth mask, and the second output is a sum of the second element and the third mask.

FIG. 5 is an example computer system 500. The system 500 can be used for the operations described in association with the implementations described herein, for example, as a server of a party participating in a multiparty computation (MPC) instance. For example, the system 500 may be included in computing devices of the one or more online components and/or the one or more offline components. The system 500 includes a processor 510, a memory 520, a storage device 530, and an input/output device 540. The components 510, 520, 530, and 540 are interconnected using a system bus 550. The processor 510 is capable of processing instructions for execution within the system 500. In some implementations, the processor 510 is a single-threaded processor. The processor 510 is a multi-threaded processor. The processor 510 is capable of processing instructions stored in the memory 520 or on the storage device 530 to display graphical information for a user interface on the input/output device 540.

The memory 520 stores information within the system 500. In some implementations, the memory 520 includes one or more computer-readable media. The memory 520 can be a volatile memory unit or a non-volatile memory unit. The storage device 530 is capable of providing mass storage for the system 500. The storage device 530 is a computer-readable medium. The storage device 530 may be a floppy disk device, a hard disk device, an optical disk device, or a tape device. The input/output device 540 provides input/output operations for the system 500. The input/output device 540 includes a keyboard and/or pointing device. The input/output device 540 includes a display unit for displaying graphical user interfaces.

In this specification the term "engine" will be used broadly to refer to a software based system or subsystem that can perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand-alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a data communication network.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read-only memory or a random-access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface, a web browser, or an app through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially be claimed as such, one or more features from a claimed combination can in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A method (400) comprising:
obtaining (402), by a first server of a first party participating in a secure multi-party computation (MPC) instance, *q* control bits corresponding to *q* switches of a switching network, wherein the *q* control bits are obtained based on a permutation to permute a sequence of *n* elements, where q and *n* are positive integers;
for a first switch of the *q* switches:
receiving (406), by the first server based on oblivious transfer, a random number selected from a first random number or a second random number, wherein the random number is selected based on a control bit corresponding to the first switch;
receiving (408) a first input through a first input wire of the first switch, wherein the first input is generated based on a first mask corresponding to the first input wire;
receiving (408) a second input through a second input wire of the first switch, wherein the second input is generated based on a second mask corresponding to the second input wire;
receiving (410) a correction word of the first switch, wherein the correction word is generated based on:
the second random number,
the first mask, and
a fourth mask corresponding to a second output wire of the first switch, wherein the fourth mask is generated based on the second mask and the first random number; and
in response to determining the first random number is selected as the random number:
generating (412) a first output based on the first input and the first random number; and
generating (412) a second output based on the second input and the first random number; or
in response to determining that the second random number is selected as the random number:
generating (414) the first output based on the first input, the second random number, and the correction word; and
generating (414) the second output based on the second input, the second random number and the correction word; and
determining (416) a permuted sequence of *n* elements based on an output of the switching network determined based on the first output and the second output of the first switch.

2. The method (400) of claim 1, wherein the first server receives the first random number as the random number when the control bit corresponding to the first switch indicates a straight connection between input wires and output wires of the first switch; and
wherein the first server receives the second random number as the random number when the control bit corresponding to the first switch indicates a cross connection between input wires and output wires of the first switch.

3. The method (400) of claim 1, wherein a third mask corresponding to a first output wire of the first switch is generated based on the first mask and the first random number.

4. The method (400) of claim 3, wherein:
the third mask is an exclusive OR (XOR) result of the first mask and the first random number;
the fourth mask is an XOR result of the second mask and the first random number;
the correction word is an XOR result of the first mask, the fourth mask, and the second random number;
the first input is an XOR result of the first mask and a first element of the sequence of *n* elements; and
the second input is an XOR result of the second mask and a second element of the sequence of *n* elements.

5. The method (400) of claim 4, comprising:
in response to determining the first random number is selected as the random number:
computing an XOR result of the first input and the first random number as the first output; and
computing an XOR result of the second input and the first random number as the second output.

6. The method (400) of claim 4, comprising:
in response to determining the second random number is selected as the random number:
computing an XOR result of the first input, the second random number, and the correction word as the first output; and
computing an XOR result of the second input, the second random number, and the correction word as the second output.

7. The method (400) of claim 3, wherein:
the third mask is a sum of the first mask and the first random number;
the fourth mask is difference between the second mask and the first random number;
the correction word is difference between the fourth mask and a sum of the first mask and the second random number;
the first input is a sum of the first mask and a first element of the sequence of *n* elements; and
the second input is a sum of the second mask and a second element of the sequence of *n* elements,
wherein sums and differences are calculated over a ring of *l* bits, wherein the first mask, the second mask, the third mask and the fourth mask each comprise *l* bits, where *l* is a positive integer.

8. The method (400) of claim 7, comprising:
in response to determining the first random number is selected as the random number:
computing a sum of the first input and the first random number as the first output; and
computing a difference between the second input and the first random number as the second output.

9. The method (400) of claim 7, comprising:
in response to determining the second random number is selected as the random number:
computing a sum of the first input, the second random number, and the correction word as the first output; and
computing a difference between the second input and a sum of the second random number and the correction word as the second output.

10. The method (400) of claim 1, wherein the switching network comprises a Benes network.

11. The method (400) of claim 1, wherein the secure MPC instance is a secure two-party computation instance.

12. One or more non-transitory computer-readable storage media (520, 530) storing one or more instructions that, when executable by one or more computers, cause the one or more computers to perform the method of any of claims of 1-11.

13. A computer-implemented system (500), comprising:
one or more computers; and
one or more computer memory devices interoperably coupled with the one or more computers and having non-transitory computer-readable storage media storing one or more instructions that, when executed by the one or more computers, perform the method of any of claims of 1-11.
